# EUROPEAN PATENT SPECIFICATION

(11) **EP 4 067 172 B1**
(45) Date of publication and mention of the grant of the patent: **13.03.2024**
(21) Application number: 22166035.0
(22) Date of filing: 31.03.2022
(51) Int. Cl.: B60R 13/04, B60J 5/10

(54) **TAILGATE TRIM, TAILGATE ASSEMBLY, AND VEHICLE**
HECKKLAPPENVERKLEIDUNG, HECKKLAPPENANORDNUNG UND FAHRZEUG
GARNITURE DE HAYON, ENSEMBLE HAYON, ET VÉHICULE

(30) Priority: 02.04.2021 CN 202110359935
(43) Date of publication of application: 05.10.2022
(73) Proprietor: Stellantis Auto SAS, 78300 Poissy (FR)
(72) Inventor: WANG, ZI YE, SHANGHAI, 200030 (CN); LI, BING, SHANGHAI, 200030 (CN); SUN, WEI, SHANGHAI, 200030 (CN); ZHU, YUAN YUAN, SHANGHAI, 200030 (CN); YU, YAO, SHANGHAI, 200030 (CN)

(56) References cited:
- CN-U- 209 111 908
- CN-U- 209 738 779

## Description

### RELATED FIELD

The present disclosure generally relates to the field of components for a motor vehicle, and in particular to a tailgate trim. The present disclosure further relates to a tailgate assembly comprising the tailgate trim, and a vehicle comprising the tailgate assembly.

### BACKGROUND

At present, in order to satisfy lightweight design of a vehicle body and to improve endurance of a vehicle, the use of lightweight plastic materials in more and more vehicle body structures instead of original metal materials has become a trend in the field of new energy vehicles, especially hybrid vehicles and electric vehicles. For example, a full-plastic tailgate assembly is popular with more and more vehicle manufacturers due to its excellent lightweight effect.

The full-plastic tailgate assembly generally comprises a tailgate inner panel and a tailgate trim fixedly connected to the outer side of the tailgate inner panel by means of snap-fit, gluing, etc. The tailgate trim may comprise, for example, a tailgate middle trim on which a component such as a taillight may be mounted, and a tailgate lower trim connected to the lower end of the tailgate middle trim and on which a component such as a license plate may be mounted. It is conceivable that the tailgate lower trim needs to be repaired or replaced due to a reason such as being vulnerable to collision, thus the tailgate middle trim and the tailgate lower trim are generally designed as two independent components connected to each other.

When viewed from the rear of the vehicle, a Z-direction gap can be seen between the tailgate middle trim and the tailgate lower trim. However, the Z-direction gap generally cannot remain substantially uniform along the boundary of the tailgate middle trim or the tailgate lower trim due to, for example, the manufacturing tolerance of the tailgate middle trim or the tailgate lower trim, and is difficult to be adjusted during the manufacturing process, thereby affecting the external aesthetics of the rear side of the vehicle body, which is not conducive to the perceived quality for user.

From the prior art CN 209 738 779 U is known and discloses the preamble of claim 1.

### SUMMARY

An object of the present disclosure is to provide a tailgate trim to overcome the defect of the prior art in which it is difficult to remain the vertical gap between the tailgate middle trim and the tailgate lower trim uniform, thus effectively improving the aesthetics of the rear side of the vehicle body.

To this end, a first aspect of the present disclosure provides a tailgate trim adapted to be connected to an outer side of a tailgate inner panel of a tailgate assembly and comprising at least a tailgate middle trim and a tailgate lower trim, wherein the tailgate middle trim comprises a lower-end connecting portion bent inward from a lower end of the tailgate middle trim, wherein the tailgate lower trim comprises an upper-end connecting portion bent inward from an upper end of the tailgate lower trim, and wherein the tailgate trim further comprises an adjusting component disposed on the upper-end connecting portion and/or the lower-end connecting portion and extending over at least a part of the transverse length of the tailgate trim, such that a vertical gap between the tailgate middle trim and the tailgate lower trim remains uniform.

Optionally, the adjusting component is an adjusting rib integrally formed on the upper-end connecting portion and/or the lower-end connecting portion.

Optionally, the adjusting component is spaced apart from an outer surface of the tailgate trim.

Optionally, the adjusting component extends over the entire transverse length of the tailgate trim.

Optionally, the adjusting component comprises a plurality of adjusting sections evenly distributed by a same interval over the entire transverse length of the tailgate trim.

Optionally, the tailgate lower trim comprises two end sections located at transverse ends of the tailgate lower trim and a middle section connecting the two end sections and protruding upward relative to the end sections in the vertical direction.

Optionally, the adjusting component extends over at least a part of the transverse length of the end sections.

Optionally, the middle section is recessed inward relative to the end sections at a position where the tailgate lower trim is divided from the tailgate middle trim.

A second aspect of the present disclosure provides a tailgate assembly comprising the tailgate trim according to the first aspect of the present disclosure.

A third aspect of the present disclosure provides a vehicle comprising the tailgate assembly according to the second aspect of the present disclosure.

Compared with the prior art, in the tailgate assembly according to the present disclosure, the vertical gap between the tailgate middle trim and the tailgate lower trim can be easily adjusted by the adjusting component disposed on the upper-end connecting portion of the tailgate lower trim and/or the lower-end connecting portion of the tailgate middle trim, so as to avoid the defect that the vertical gap is not uniform, thereby improving the aesthetics of the rear side of the vehicle body; in addition, the tailgate trim according to the present disclosure has the advantages of simple structure, convenient manufacture and low cost, thus can be widely used in various types of the tailgate assembly.

### BRIEF DESCRIPTION OF THE DRAWINGS

Other features and advantages of the present disclosure will be better understood through the following preferred embodiments described in detail with reference to the accompanying drawings, in which a same reference numeral indicates a same or similar component. It is conceivable that the drawings are used not only to explain the present disclosure, but also to define the present disclosure when necessary.
FIG. 1 is a partial perspective view of a tailgate assembly according to an embodiment of the present disclosure;
FIG. 2 is a perspective view of an outer side of a tailgate middle trim of the tailgate assembly in FIG. 1;
FIG. 3 is a perspective view of an outer side of a tailgate lower trim of the tailgate assembly in FIG. 1;
FIG. 4 is a perspective view of an inner side of the tailgate lower trim of the tailgate assembly in FIG. 1;
FIG. 5 is a perspective view of an outer side of a tailgate inner panel of the tailgate assembly in FIG. 1;
FIG. 6 is a schematic view for mounting the tailgate lower trim to the tailgate inner panel of the tailgate assembly in FIG. 1;
FIG. 7 is a perspective view of a connecting pin adapted to the mounting structure in FIG. 6;
FIG. 8 is a partial enlarged view of the tailgate middle trim of the tailgate assembly in FIG. 1;
FIG. 9 is a schematic view for mounting the tailgate middle trim to the tailgate lower trim of the tailgate assembly in FIG. 1;
FIG. 10 is a partial enlarged view of the tailgate lower trim of the tailgate assembly in FIG. 1;
FIG. 11 is another partial enlarged view similar to Fig. 10;
FIG. 12 is a partial enlarged view of the tailgate assembly in FIG. 1 at a position of a vertical gap between the tailgate middle trim and the tailgate lower trim;
FIG. 13 is another partial enlarged view similar to Fig. 12;
FIG. 14 is a schematic view of a recessed structure of the tailgate lower trim relative to the tailgate middle trim of the tailgate assembly in FIG. 1;
FIG. 15 is a partial enlarged view of an outer side of a tailgate assembly in the prior art at a position for connecting a tailgate middle trim to a tailgate lower trim; and
FIG. 16 is a schematic view of a gap of the connecting structure in FIG. 15.

### DETAILED DESCRIPTION

The implementation and usage of embodiments are discussed in detail below. However, it is conceivable that the specific embodiments discussed herein are merely intended to illustrate specific ways for implementing and using the present disclosure, and are not intended to limit the scope of the present disclosure.

In the specification, when describing a structure or a position of a component, the directional expressions such as "upper", "lower", "left", "right", "front", and "rear" are not absolute, but relative. When the component is arranged as shown in the figures, these directional expressions are appropriate, but when the position of the component in the figures is altered, these directional expressions should be altered accordingly.

In the specification, the X direction corresponds to the longitudinal direction of the vehicle, the Y direction corresponds to the transverse direction of the vehicle, and the Z direction corresponds to the vertical direction. In addition, "inner" and "outer" are both defined with reference to the interior and exterior of the vehicle, i.e., "inner side" refers to a side facing the interior of the vehicle, "outer side" refers to a side facing the exterior of the vehicle, "inner surface" refers to a surface facing the interior of the vehicle, and "outer surface" refers to a surface facing the exterior of the vehicle.

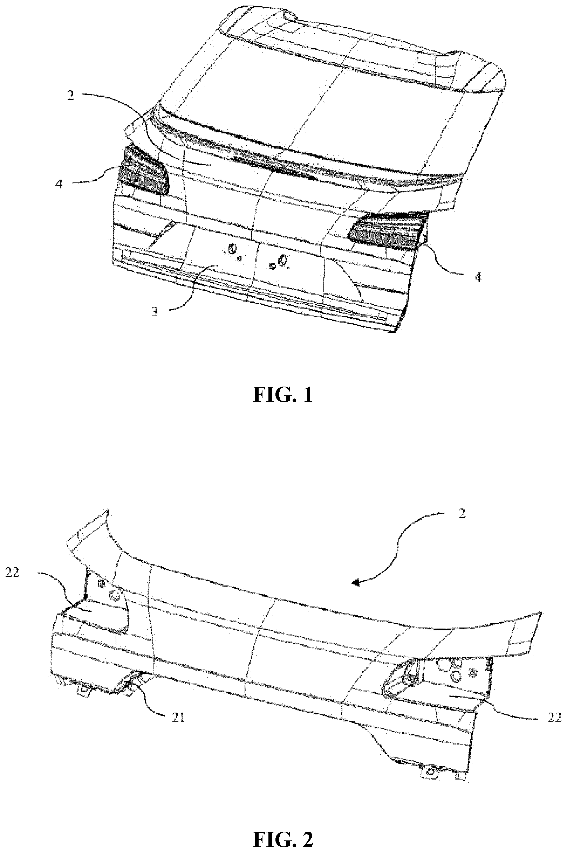

As shown in FIG. 1 to FIG. 5, a tailgate assembly for a motor vehicle according to the present disclosure mainly comprises a tailgate inner panel 1 and a tailgate trim (also known as a tailgate outer trim) fixedly connected to the outer side of the tailgate inner panel 1. The tailgate trim comprises at least a tailgate middle trim 2 and a tailgate lower trim 3. Two mounting recesses 22 for mounting left and right taillights 4 are provided at Y-direction ends of the tailgate middle trim 2, and the approximate central position of the outer side of the tailgate lower trim 3 is generally used for mounting a license plate.

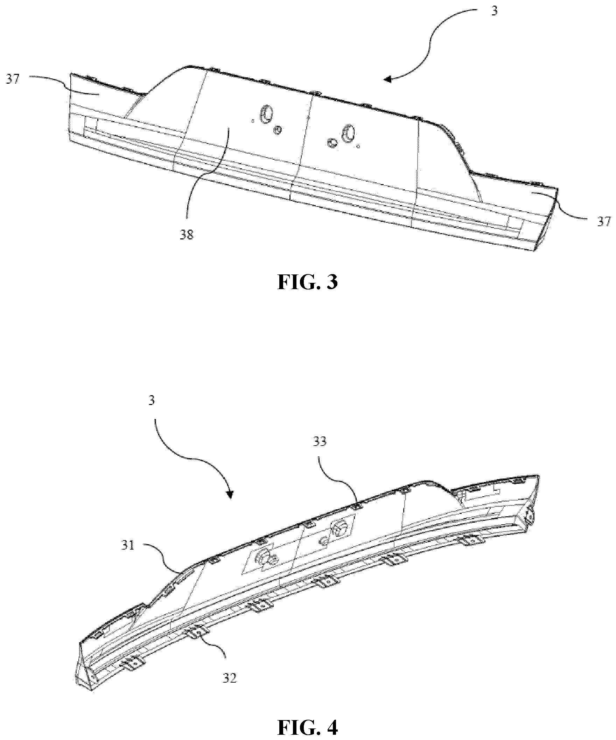

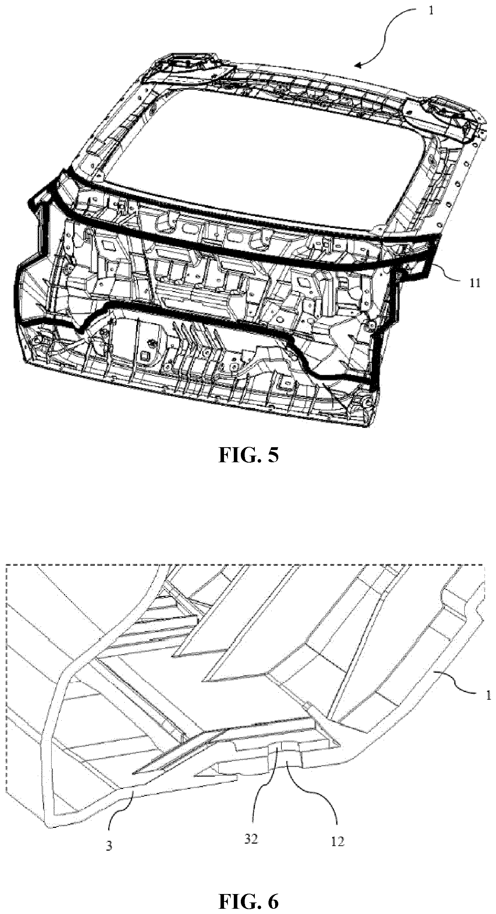

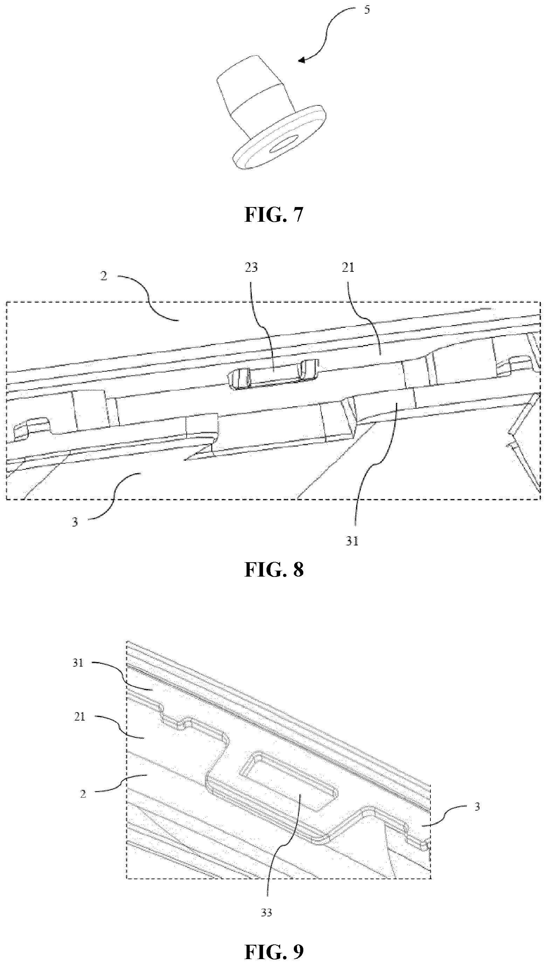

More specifically, in the illustrated embodiments, the outer side of the tailgate inner panel 1 is provided with an adhesive connection area 11 (i.e., the dark area in FIG. 5) corresponding to the position of the peripheral edge of the tailgate middle trim 2, which is adapted to be glued and connected to the corresponding position of the inner side of the tailgate middle trim 2. The bottom of the tailgate inner panel 1 is provided with a plurality of lower-trim connecting portions, for example, each comprising a first hole 12, as shown in FIG. 6, that allows a connecting pin to pass through. Accordingly, the corresponding position of the bottom of the tailgate lower trim 3 is provided with a plurality of inner-panel connecting portions, for example, each comprising a second hole 32, as shown in FIG. 4 and FIG. 6, that allows a same connecting pin to pass through, such that a connecting pin 5 as shown in FIG. 7 passes through the first hole 12 and the second hole 32 aligned with each other, so as to connect the bottom of the tailgate inner panel 1 to the bottom of the tailgate lower trim 3.

The lower end of the tailgate middle trim 2 and the upper end of the tailgate lower trim 3 are connected to each other. As shown in FIG. 2, FIG. 8, and FIG. 9, the tailgate middle trim 2 comprises a lower-end connecting portion 21 bent inward from its lower end. The lower-end connecting portion 21 extends over the entire Y-direction length of the tailgate middle trim 2, so as to connect the tailgate middle trim 2 to the tailgate lower trim 3 and the tailgate inner panel 1. As shown in FIG. 4, FIG. 8, and FIG. 9, the tailgate lower trim 3 comprises an upper-end connecting portion 31 bent inward from its upper end. The upper-end connecting portion 31 extends over the entire Y-direction length of the tailgate lower trim 3, so as to connect the tailgate lower trim 3 to the tailgate middle trim 2.

More specifically, the upper-end connecting portion 31 of the tailgate lower trim 3 comprises a plurality of middle-trim snap-fit portions protruding inward and spaced apart from each other in the Y direction, for example, each comprising a groove 33 as shown in FIG. 4 and FIG. 9. Accordingly, the corresponding position of the lower end of the tailgate middle trim 2 is provided with a plurality of lower-trim snap-fit portions, for example, each comprising a snap 23 as shown in FIG. 8, such that the snap 23 mates with the groove 33 so as to connect the lower end of the tailgate middle trim 2 to the upper end of the tailgate lower trim 3.

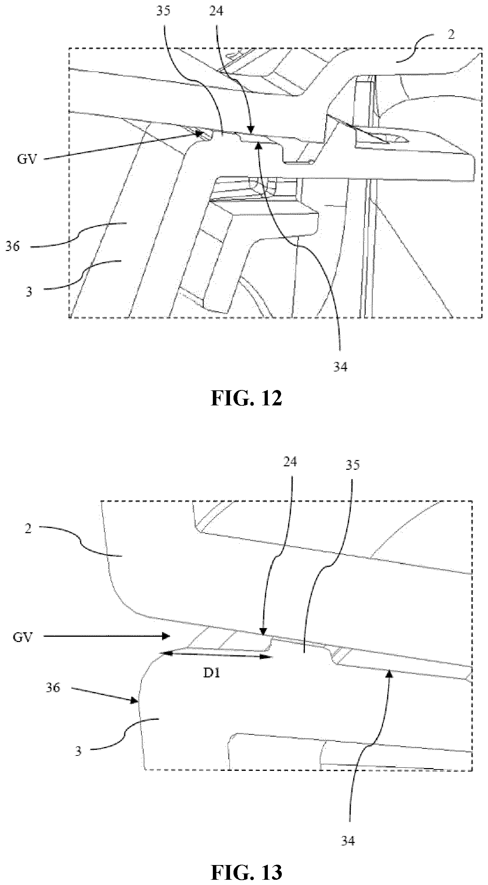

Especially referring to FIG. 12 and FIG. 13, after the tailgate middle trim 2 and the tailgate lower trim 3 are both connected to the tailgate inner panel 1, and the tailgate middle trim 2 is connected to the tailgate lower trim 3, an obvious Z-direction gap GV between the tailgate middle trim 2 and the tailgate lower trim 3, that is, the Z-direction gap GV between the lower surface 24 of the lower-end connecting portion 21 and the upper surface 34 of the upper-end connecting portion 31, can be seen from the rear of the vehicle. The Z-direction gap GV extends over the entire Y-direction length of the tailgate middle trim 2 or the tailgate lower trim 3, and thus may not remain substantially uniform along the boundary of the tailgate middle trim 2 or the tailgate lower trim 3 due to, for example, the manufacturing tolerance of the tailgate middle trim 2 or the tailgate lower trim 3. Further, it is conceivable that, since the area of the upper surface 34 of the upper-end connecting portion 31 or the area of the lower surface 24 of the lower-end connecting portion 21 is relatively large, it is difficult to improve the uniformity of the Z-direction gap GV through local adjustment.

In order to overcome the above-mentioned defects, the tailgate assembly according to the present disclosure further comprises an adjusting/tuning component disposed on the upper-end connecting portion 31 or the lower-end connecting portion 21, so as to fill and adjust the Z-direction gap between the tailgate middle trim 2 and the tailgate lower trim 3, such that the Z-direction gap can remain substantially uniform along the boundary of the tailgate middle trim 2 or the tailgate lower trim 3.

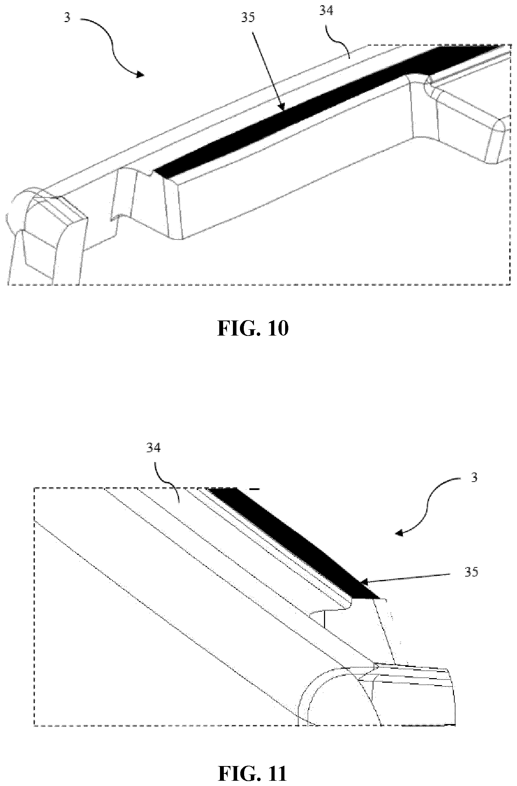

As shown in FIG. 10 to FIG. 13, the adjusting component is, for example, an adjusting rib 35 that protrudes upward from the upper surface 34 of the upper-end connecting portion 31 and is preferably integrally formed with the upper-end connecting portion 31. The adjusting rib 35 extends over at least a part of the Y-direction length of the tailgate lower trim 3, and preferably extends over the entire Y-direction length of the tailgate lower trim 3 (that is, extends along the entire upper boundary of the tailgate lower trim 3). Therefore, when adjusting the Z-direction gap between the tailgate middle trim 2 and the tailgate lower trim 3, it is only necessary to change the Z-direction dimension of the adjusting rib 35 at the required position, rather than to adjust the lower surface 24 of the lower-end connecting portion 21 or the upper surface 34 of the upper-end connecting portion 31.

The Z-direction dimension of the adjusting rib 35 needs to be determined according to the actual dimension of the Z-direction gap. Under a normal circumstance, the Z-direction dimension of the adjusting rib 35 ranges from 0.5 mm to 2 mm. In addition, the X-direction rear edge of the adjusting rib 35 on the upper-end connecting portion 31 is spaced apart from the outer surface 36 of the tailgate lower trim 3 (that is, the outer structural boundary of the tailgate lower trim 3), for example, by an interval D1 as shown in FIG. 13. Under a normal circumstance, the interval D 1 ranges from 5 mm to 10 mm, so as to avoid easier visibility of the adjustment rib 35 from the rear side of the vehicle.

According to a variant, the adjusting rib 35 does not extend continuously, but is arranged to comprise a plurality of adjusting sections. The plurality of adjusting sections may be evenly distributed by a same interval over the entire Y-direction length of the tailgate lower trim 3, or may be arranged at a required position according to actual need, for example, at a position adjacent to a Y-direction end of the tailgate lower trim 3.

According to another variant, the adjusting component is an adjusting rib that protrudes downward from the lower surface 24 of the lower-end connecting portion 21 and is preferably integrally formed with the lower-end connecting portion 21. The adjusting rib extends over at least a part of the Y-direction length of the tailgate middle trim 2. The dimension, structure and function of the adjusting rib according to this variant are similar to those of the above-mentioned adjusting rib 35 on the upper-end connecting portion 31, thus the same descriptions will not be repeated. It is also conceivable that, in case that the adjusting rib extends discontinuously, according to another variant, one part of the adjusting rib may be arranged on the upper surface 34 of the upper-end connecting portion 31, and another part thereof may be arranged on the lower surface 24 of the lower-end connecting portion 21.

As shown in FIG. 3 and FIG. 14 to FIG. 16, in order to increase the aesthetics of lines, the shape of the position where the tailgate lower trim 3 is divided/separated from the tailgate middle trim 2 is generally not linear. More specifically, the tailgate lower trim 3 comprises two end sections 37 located at its Y-direction ends and a middle section 38 connecting the two end sections 37 and protruding upward relative to the end sections 37 in the Z direction. The top of the middle section 38 is arc-shaped. In this case, the adjusting rib 35 may, for example, be arranged to extend only over at least a part of the Y-direction length of the two end sections 37, preferably over the entire Y-direction length of the two end sections 37.

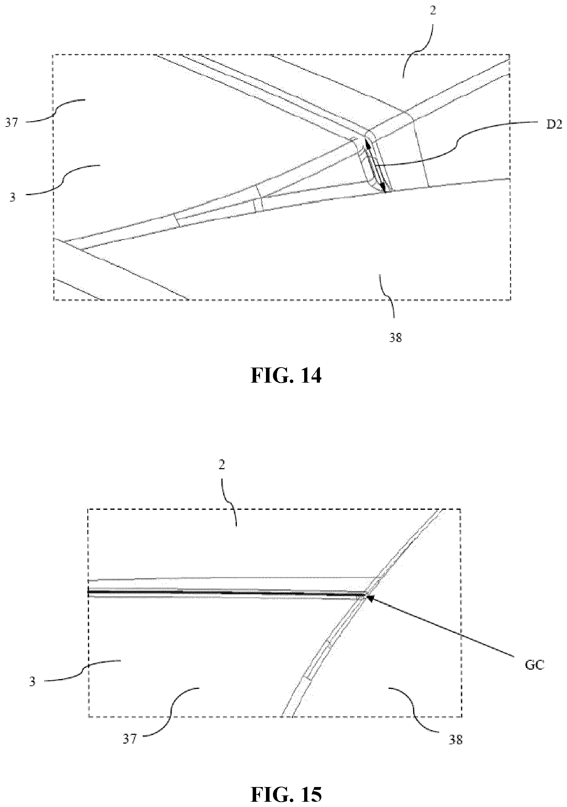

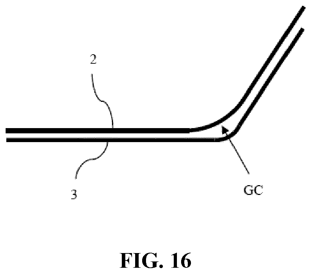

In addition, in the tailgate assembly in the prior art shown in FIG. 15 and FIG. 16, at the position where the tailgate lower trim 3 is divided from the tailgate middle trim 2, since the middle section 38 protrudes upward relative to the end sections 37, the upper edge of the tailgate lower trim 3 is bent at the transition position between the end sections 37 and the middle section 38, and the lower edge of the tailgate middle trim 2 is also bent at the corresponding position. Since it is generally difficult to perfectly mate the tailgate middle trim 2 with the tailgate lower trim 3 at the above-mentioned bending position, an obvious corner gap GC can be seen at this position when viewed from the rear of the vehicle.

In the tailgate assembly according to the present disclosure, at the position where the tailgate lower trim 3 is divided from the tailgate middle trim 2, the outer surface of the middle section 38 is recessed inward, for example, by a distance D2 as shown in FIG. 14, relative to the outer surface of the end sections 37. This recessed structure can hide the above-mentioned corner gap GC, thereby further improving the aesthetics of the rear side of the vehicle body.

The technical contents and features of the present disclosure have been disclosed above. However, it is conceivable that, those skilled in the art can make various changes and improvements to the above concept under the creative idea of the present disclosure, all of which fall within the protection scope of the present disclosure. The description to the above embodiments is exemplary rather than limitative, and the protection scope of the present disclosure is determined by the appended claims.

## Claims

1. A tailgate trim adapted to be connected to an outer side of a tailgate inner panel (1) of a tailgate assembly and comprising at least a tailgate middle trim (2) and a tailgate lower trim (3), **characterized in that** the tailgate middle trim (2) comprises a lower-end connecting portion (21) bent inward from a lower end of the tailgate middle trim (2), wherein the tailgate lower trim (3) comprises an upper-end connecting portion (31) bent inward from an upper end of the tailgate lower trim (3), and wherein the tailgate trim further comprises an adjusting component disposed on the upper-end connecting portion (31) and/or the lower-end connecting portion (21) and extending over at least a part of the transverse length of the tailgate trim, such that a vertical gap between the tailgate middle trim (2) and the tailgate lower trim (3) remains uniform.

2. The tailgate trim according to claim 1, wherein the adjusting component is an adjusting rib integrally formed on the upper-end connecting portion (31) and/or the lower-end connecting portion (21).

3. The tailgate trim according to claim 1, wherein the adjusting component is spaced apart from an outer surface of the tailgate trim.

4. The tailgate trim according to any one of claims 1-3, wherein the adjusting component extends over the entire transverse length of the tailgate trim.

5. The tailgate trim according to any one of claims 1-3, wherein the adjusting component comprises a plurality of adjusting sections evenly distributed by a same interval over the entire transverse length of the tailgate trim.

6. The tailgate trim according to any one of claims 1-3, wherein the tailgate lower trim (3) comprises two end sections (37) located at transverse ends of the tailgate lower trim (3) and a middle section (38) connecting the two end sections (37) and protruding upward relative to the end sections (37) in the vertical direction.

7. The tailgate trim according to claim 6, wherein the adjusting component extends over at least a part of the transverse length of the end sections (37).

8. The tailgate trim according to claim 6, wherein the middle section (38) is recessed inward relative to the end sections (37) at a position where the tailgate lower trim (3) is divided from the tailgate middle trim (2).

9. A tailgate assembly comprising a tailgate inner panel (1) and the tailgate trim according to any one of claims 1-8 and connected to the tailgate inner panel (1).

10. A vehicle comprising the tailgate assembly according to claim 9.

## Patentansprüche

1. eine Heckklappe, die so angepasst ist, dass sie an eine Außenseite einer Innenwand der Heckklappe (1) einer Heckklappe angeschlossen werden kann und mindestens eine Hec kklappe-Mittelschicht (2) umfasst und eine Heckklappe unterer Trimm (3), bei der die Hecktür (2) aus einem nach innen gerichteten unteren Ende der Hecktür (2) besteht, bei dem die Hecktür unten nach innen gerichtet ist, wobei die Hecktür (3) aus einem nach innen gerichteten Teil (31) besteht, der von einem oberen Ende des unteren Hecktür-Trimms (3) nach innen gebogen ist, und bei dem die Heckklappe eine weitere eine Verstellkomponente, die auf den oberen Anschlussbereich (31) und/oder den unteren Anschlussbereich (21) entsorgt wird und sich mindestens über einen Teil der Querlänge der Heckklappe erstreckt, sodass ein vertikaler Abstand zwischen dem mittleren Heckklappe (2) und der unteren Heckklappe (3) gleichmäßig bleibt.

2. die Heckklappe nach Angabe 1, bei der die Verstellkomponente ein auf dem oberen Ende des Anschlussbereichs (31) und/oder dem unteren Ende des Anschlussbereichs (21) vollständig geformter Verstellrib ist.

3. Die Heckklappe trimmt nach Angabe 1, wobei sich das Verstellteil von einer Außenfläche der Heckklappe abweicht.

4. Die Heckklappe trimmt nach jedem der Angaben 1-3, wobei sich das Verstellteil über die gesamte Querlänge des Heckklappe-Trimms erstreckt.

5. Die Heckklappe trimmt nach jeder der Angaben 1-3, wobei die Verstellkomponente aus einer Vielzahl von Verstellabschnitten besteht, die gleichmäßig über die gesamte Querlänge der Heckklappe verteilt sind.

6. Die Heckklappe ist nach einer der Angaben 1-3 zu schneiden, wobei die untere Heckklappe (3) aus zwei Endabschnitten (37) besteht, die an den Querenden der unteren Heckklappe (3) und einem mittleren Abschnitt (38) liegen, der die beiden Endabschnitte (37) verbindet und in vertikaler Richtung nach oben in Richtung der Endabschnitte (37) ragt.

7. die Heckklappe nach Angabe 6, wobei sich die Verstelleinrichtung mindestens über einen Teil der Querlänge der Endabschnitte erstreckt (37).

8. die Heckklappe nach Angabe 6, bei der der mittlere Abschnitt (38) nach innen in Bezug auf die Endabschnitte (37) an einer Stelle aufgerollt ist, an der die Heckklappe unterer Trimm (3) von der Heckklappe-Mitteltrimm (2) getrennt ist.

9. Eine Heckklappe-Baugruppe, bestehend aus einer Innenwand (1) der Heckklappe und der Heckklappe, je nach Anforderung 1-8, die an die Innenwand der Heckklappe angeschlossen ist (1).

10. Ein Fahrzeug, das die Heckklappe nach Angabe 9 umfasst.

## Revendications

1. Un garnissage adapté pour être relié à un côté extérieur d'un panneau intérieur de porte arrière (1) d'un ensemble de porte arrière et comprenant au moins un garnissage moyen de porte arrière (2) et un tranchant inférieur de la porte arrière (3), dans lequel l'armature médiane de la porte arrière (2) comprend une partie de raccordement du bas (21) courbée vers l'intérieur d'une extrémité inférieure de l'armature intermédiaire de la porte arrière (2), dans laquelle l'armature inférieure de la porte arrière (3) comprend une partie de raccordement du haut (3) courbée vers l'intérieur d'extrémité arrière un composant de réglage disposé sur la partie supérieure de raccordement (31) et/ou la partie inférieure de raccordement (21) et s'étendant sur au moins une partie de la longueur transversale de l'assiette de la porte arrière, de telle sorte qu'un écart vertical entre l'extrémité intermédiaire de la porte arrière (2) et l'extrémité inférieure de la porte arrière (3) demeure uniforme.

2. La garniture de la porte d'échappement conformément à la revendication 1, dans laquelle le composant de réglage est une nervure de réglage complètement formée sur la partie de raccordement supérieure (31) et/ou la partie de raccordement inférieure (21).

3. La garniture de la porte d'échappement conformément à la revendication 1, dans laquelle le composant de réglage est espacé d'une surface extérieure de l'assiette de la porte d'échappement.

4. La garniture de la porte arrière selon l'une des revendications 1-3, dans laquelle la composante de réglage s'étend sur toute la longueur transversale de la garniture de la porte arrière.

5. La garniture de la porte arrière selon l'une des revendications 1-3, dans laquelle la composante de réglage comprend une pluralité de sections de réglage réparties uniformément par un même intervalle sur toute la longueur transversale de la grille de la porte arrière.

6. La garniture de la porte arrière selon l'une ou l'autre des revendications 1-3, dans laquelle la garniture inférieure de la porte arrière (3) comprend deux sections d'extrémité (37) situées à l'extrémité transversale de la garniture inférieure de la porte arrière (3) et une section centrale (38) reliant les deux sections d'extrémité (37) et se rapprochant vers le haut par rapport aux sections d'extrémité (37) dans la direction verticale.

7. La garniture de la porte arrière conformément à la revendication 6, dans laquelle le composant de réglage s'étend sur au moins une partie de la longueur transversale des sections terminales (37).

8. La garniture de la porte arrière selon la revendication 6, où la section médiane (38) est enfoncée vers l'intérieur par rapport aux sections finales (37) à une position où l'armature inférieure de la porte arrière (3) est divisée de l'armature médiane de la porte arrière (2).

9. Un ensemble de porte arrière comprenant un panneau intérieur de porte arrière (1) et l'armature de porte arrière selon l'une des revendications 1-8 et relié au panneau intérieur de porte arrière (1).

10. Véhicule comprenant l'ensemble de porte d'échappement conformément à la revendication 9.
